# EUROPÄISCHE PATENTSCHRIFT

(11) **EP 3 513 217 B1**
(45) Veröffentlichungstag und Bekanntmachung des Hinweises auf die Patenterteilung: **02.07.2025**
(21) Anmeldenummer: 17761897.2
(22) Anmeldetag: 06.09.2017
(51) Int. Cl.: G01S 17/42, G01S 7/481

(54) **LASERSCANNER**
LASER SCANNER
SCANNER LASER

(30) Priorität: 15.09.2016 DE 102016117431; 07.10.2016 DE 102016119155; 30.06.2017 DE 102017114617
(43) Veröffentlichungstag der Anmeldung: 24.07.2019
(73) Patentinhaber: Zoller & Fröhlich GmbH, 88239 Wangen im Allgäu (DE)
(72) Erfinder: FRÖHLICH, Christoph, 88239 Wangen (DE); METTENLEITER, Markus, 88316 Isny (DE)
(74) Vertreter: Winter, Brandl - Partnerschaft mbB
(86) Internationale Anmeldenummer: PCT/EP2017/072365
(87) Internationale Veröffentlichungsnummer: WO 2018/050516

(56) Entgegenhaltungen:
- US-A1- 2014 111 618
- US-A1- 2014 300 906
- TRIMBLE: "TRIMBLE TX5 3D LASER SCANNER QUICK START GUIDE", 19 September 2012 (2012-09-19), XP055426315, Retrieved from the Internet <URL:http://mep.trimble.com/sites/mep.trimble.com/files/Trimble TX5 Quick Start Guide.pdf> [retrieved on 20171117]
- TRIMBLE NAVIGATION LIMITED: "Trimble TX5 3D Laser Scanner", 1 October 2012 (2012-10-01), XP055426328, Retrieved from the Internet <URL:http://mep.trimble.com/sites/mep.trimble.com/files/Trimble TX5 User Guide.pdf> [retrieved on 20171117]

## Beschreibung

Die Erfindung betrifft einen Laserscanner gemäß dem Oberbegriff des Patentanspruches 1.

Der Grundaufbau derartiger Laserscanner ist beispielsweise in der DE 101 50 436 B4 offenbart. Darin ist ein 3D-Laserscanner beschrieben, über den Messobjekte, beispielsweise Gebäude, Tatorte, Fertigungsanlagen etc. mit hoher Genauigkeit vermessen werden können. Bei einem derartigen Scanner wird der von einer Laserdiode abgegebene Messstrahl durch ein mechanisches Strahlablenkungssystem derart abgelenkt, dass eine flächendeckende, dreidimensionale räumliche Umgebungsvermessung ermöglicht ist. Die digitalisierten Messdaten werden über eine Recheneinheit verarbeitet und abgespeichert und stehen dort zur weiteren Bearbeitung und Visualisierung des vermessenen Objektes zur Verfügung.

Diese 3D-Vermessung erfolgt durch Führen des modulierten Laserlichtes über die zu vermessende Umgebung, wobei für unterschiedliche Raumrichtungen sowohl der Entfernungs- als auch der Reflektionswert punktuell gemessen werden kann. Aus der Anordnung aller vermessenen Raumrichtungen resultieren Entfernungs- und Reflektivitätsbilder. Die Entfernungsbilder geben die Geometrie der Umgebung wieder und die Reflektivitätsbilder deren visuelle Abbildung, analog zu den Grauwertbildern einer Videokamera. Beide Bilder korrespondieren pixelweise und sind aufgrund der eigenständigen, aktiven Beleuchtung mit Laserlicht weitgehend unabhängig von Umwelteinflüssen.

Bei der bekannten Lösung ist das Strahlablenksystem mit einem Ablenkspiegel ausgeführt, der in einem Drehkopf - im Folgenden Rotor genannt - des Laserscanners gelagert ist. Dieser ist umlaufend rotierend um eine erste Achse, vorzugsweise eine Horizontalachse drehbar an einem Gehäuse des Scanners gelagert, der seinerseits um zumindest 180° um eine Drehachse verschwenkbar ist, die rechtwinklig zur Rotationsachse, beispielsweise in Vertikalrichtung verläuft. Wie erwähnt, wird bei einem derartigen 3D-Laserscanner die Bildinformation in Form von 3D-Pixelwolken erfasst, die dann in ein Grauwertbild des Messobjektes umgerechnet werden können.

In vielen Fällen ist eine Farbabbildung des Messobjektes gewünscht. Die Farbinformation kann über eine Kamera abgetastet werden, die beispielsweise auf das Gehäuse des Laserscanners aufgesetzt wird. Es sind auch Lösungen bekannt, bei denen die Farbinformation des Messobjektes über eine im Strahlengang einer Spiegelanordnung angebrachte Kamera erfasst werden. Der Nachteil einer derartigen Lösung besteht darin, dass durch Ablenkspiegel und eventuell vorhandene andere optische Elemente Farbverfälschungen des Kamerabildes auftreten können. Systeme mit einer auf das Gehäuse des Laserscanners aufgesetzten Kamera haben den Nachteil, dass sie einen erheblichen Bauraum benötigen und des Weiteren aufgrund der unterschiedlichen Perspektiven der aufgesetzten Kamera und des eigentlichen Laserscanners Parallaxenfehler entstehen, die durch eine aufwendige Z-Bufferberechnung eliminiert werden müssen. Zur Überwindung dieses Nachteils ist in der DE 10 2012 105 027 A1 ein Laserscanner beschrieben, bei dem die Farbkamera zur Erfassung der Farbinformationen des Messobjektes am oder im Messkopf/Drehkopf angebracht ist, so dass die virtuellen optischen Zentren der Kamera und des Messstrahls im Wesentlichen zusammenfallen uns so ein Parallaxenfehler vermieden wird.

Das Konzept einer Signalverarbeitung bei Laserscannern ist in der DE 198 51 307 A1 der Anmelderin erläutert.

Entsprechende Konzepte lassen sich auch bei 2D-Laserscannern umsetzen, bei denen der Laserscanner nicht um eine Vertikalachse verschwenkbar ist sondern auf einer fahrbaren Plattform montiert ist.

Die DE 10 2014 109 432 A1 beschreibt einen Laserscanner, der zusätzlich mit einer Thermographiekamera ausgebildet ist, so dass als Messergebnis ein 3D-Scan (Punktewolke des Messobjektes) mit verknüpften Thermographiedaten vorliegt.

Da bei komplexen Messobjekten die Vermessung von unterschiedlichen Standorten aus erfolgt, können derartige Laserscanner mit einem Navigationssystem ausgeführt sein, über das der jeweilige Scannerstandort und die Scannerorientierung erfasst werden. Wie in der DE 10 2016 102 607 A1 der Anmelderin beschrieben, sind derartige in den Laserscanner integrierte Navigationssysteme so ausgelegt, dass sie eine GNSS (beispielsweise GPS)-unabhängige Bestimmung der absoluten Position des Laserscanners oder zumindest einer Relativposition zu einem bekannten Ort im Feld ermöglichen. Auf diese Weise wird die Vermessung von Innenräumen ermöglicht. Auch diese Navigationsdaten werden zur Messsignalverarbeitung in dem internen Speicher des Laserscanners abgelegt.

Insbesondere bei der Vermessung militärischer Objekte oder von Kernkraftwerken oder sicherheitsrelevanten Fertigungsanlagen besteht die Auflage, dass die Vermessung und Auswertung innerhalb der Anlage erfolgt und keinerlei Daten aus der Anlage heraus übermittelt oder verbracht werden dürfen. Bei herkömmlichen Laserscannern bedeutet dies dementsprechend, dass die gesamte 3D-Vermessung innerhalb der Anlage fertig gestellt und ausgewertet werden muss und dann anschließend die entsprechenden Daten auf der Festplatte der Recheneinheit des Laserscanners und sonstiger externer Rechner gelöscht werden müssen. Dies bedeutet einen erheblichen Aufwand, da sichergestellt sein muss, dass sämtliche Daten entfernt worden sind und ein entsprechender Nachweis auch gegenüber dem Anlagenbetreiber zu führen ist.

Die Druckschrift US 2014/0111618 A1 zeigt diesbezüglich einen Laserscanner ohne entfernbares Speichermedium.

Die Schrift "TX5 3D-Laserscanner User Guide" (Trimble) zeigt einen gattungsgemäßen Laserscanner mit herausnehmbarem Speicher für die Scandaten, der als SD-Karte ausgestaltet in einer Aufnahme des Gehäuses gehalten ist. Der Speicher kann zudem Firmware-Updates tragen und zu deren Installation genutzt werden.

Einen mit dem letztgenannten vergleichbaren Laserscanner zeigt die Druckschrift US 2014/0300906 A1.

Demgegenüber liegt der Erfindung die Aufgabe zugrunde, einen 2D- oder 3D-Laserscanner zu schaffen, der eine zuverlässige und einfache Entfernung des registrierten und ausgewerteten Scans ermöglicht.

Diese Aufgabe wird erfindungsgemäß durch einen Laserscanner mit den Merkmalen des Patentanspruches 1 gelöst.

Vorteilhafte Weiterbildungen der Erfindung sind Gegenstand der Unteransprüche.

Ein Laserscanner hat einen Rotor, der drehbar an einem Gehäuse gehalten ist, wobei im Rotor ein Strahlablenkungssystem angeordnet ist, um einen von einem Sender, beispielsweise einer Laserdiode abgegebenen Messstrahl auf ein Messobjekt oder einen von diesem reflektierten Strahl auf einen Empfänger zu lenken. Der Laserscanner ist mit einer Recheneinheit zur Steuerung des Laserscanners und zur Datenverarbeitung ausgeführt, die mit einem internen Datenspeicher zur Speicherung von Messdaten versehen ist. Offenbarungsgemäß ist vorgesehen, dass der Datenspeicher herausnehmbar in einer Aufnahme des Gehäuses gehalten ist. Unter dem Begriff "herausnehmbar" ist dabei zu verstehen, dass die Halterung zum einfachen und schnellen Wechseln oder Herausnehmen des Datenspeichers ausgelegt ist, ohne dass es einer aufwendigen Demontage von Bauelementen bedarf. Die Recheneinheit ist dabei vorzugsweise so ausgelegt, dass die relevanten Messdaten (Scandaten und Loggingdateien) nur auf diesem Datenspeicher ablegbar sind.

Bei einer nicht zur Erfindung gehörenden Variante kann das Betriebssystem und die Software zur Steuerung des Scanners auf einem internen Speicher, bspw. einem Flashspeicher abgelegt werden. Dieser ist so ausgebildet, dass darauf keinerlei Messdaten angelegt werden können und ist somit mit einem Schreibschutz versehen.

Erfindungsgemäß sind auf dem internen Datenspeicher auch die für die Ansteuerung des Laserscanners erforderliche Software und das Betriebssystem implementiert, so dass der Laserscanner nach der Herausnahme des Datenspeichers nicht mehr funktionsfähig ist.

Durch die Maßnahme, zumindest die beim Messvorgang erfassten Messdaten (3D-Pixelwolke und zugehörige Farbinformationen, Loggingdateien) auf dem internen Datenspeicher abzulegen, können die eingangs erwähnten Auflagen sehr einfach erfüllt werden, indem der Datenspeicher herausgenommen und vor Ort belassen oder auch gelöscht wird.

In dem Fall, in dem der Laserscanner keine der oben genannten sicherheitsrelevanten Auflagen erfüllen muss, kann der interne Datenspeicher (bspw. ein internes SSD- Laufwerk (SATADOM)) auch in herkömmlicher, der Gattung nicht gemäßen Weise fest installiert sein. Dann kann ein zusätzliches Speichermedium, beispielsweise eine SD-Karte vorgesehen werden, insbesondere sein, auf die die Daten kopiert werden können. Diese SD-Karte ist dann in an sich bekannter Weise in einen von außen zugänglichen Slot des Gehäuses einsetzbar.

Die Verwendung eines **S**ata **D**isc **O**n **M**odule als internen Datenspeicher hat den Vorteil, dass dieser keinen eigenen Stromanschluss benötigt, da die Stromversorgung über den Sata-Anschluss erfolgt.

In einer Weiterbildung ist der Rotor zwischen zwei Gehäuseteilen gehalten, die mittels eines sich zu diesem hin verjüngenden Gehäusezwischenteils mit einander verbunden sind - dies ist der typische Aufbau eines 3D-Laserscanners.

Bei derartigen Laserscannern ist das Gehäuse um eine senkrecht zur Rotationsachse des Rotors angeordnete Drehachse mittels eines Drehantriebes drehbar.

In einer Weiterbildung ist es vorgesehen, dass der Drehantrieb über ein spielfreies Getriebe verfügt, das vorzugsweise als Zahnradgetriebe ausgeführt ist, wobei zur Erfassung des jeweiligen Drehwinkels des Laserscanners der Drehachse des Gehäuses ein Encoder zugeordnet ist.

Um eine von einem externen Stromnetz unabhängige Vermessung zu ermöglichen, sind Laserscanner häufig mit einem Akku versehen. Diese Akkus weisen ein relativ hohes Gewicht auf, das über den vorgenannten Drehantrieb bewegt werden muss. Zur Verringerung des Massenträgheitsmomentes wird vorgeschlagen, dass mehrere, beispielsweise zwei Akkus, symmetrisch in einem vergleichsweise geringen Abstand zu der vorgenannten Drehachse angeordnet sind. Dabei wird es des Weiteren bevorzugt, wenn diese Akkus möglichst nahe an der Abstützung des Laserscanners angeordnet sind, um auch ein Kippmoment zu minimieren. Darüber hinaus sind diese Akkus im Hinblick auf die Außengeometrie aerodynamisch optimiert, um den Luftwiderstand während der Verschwenkung um die Hochachse zu minimieren. Auf diese Weise lassen sich die Messfehler bei der Vermessung von Messobjekten weiter verringern.

Dabei wird es bei einer Variante bevorzugt, wenn sich die Akkus mit einer Abdeckung des jeweiligen Gehäuseteils zu einer baulichen Einheit ergänzen.

Die Bedienung des Laserscanners ist besonders einfach, wenn an einem Gehäuseteil ein Touchdisplay angeordnet ist. Dieses Touchdisplay ist in einer Weiterbildung im Hochformat angeordnet.

Die Messgenauigkeit lässt sich weiter verbessern, wenn der Laserscanner nach dem Messprinzip der Phasenverschiebung mit drei Messfrequenzen betrieben ist.

Der herausnehmbare interne Datenspeicher kann beispielsweise bei herausgenommenem Akku zugänglich sein.

Die Anmelderin behält sich vor, auf die Anordnung der Akkus oder die Verwendung von drei Messfrequenzen oder die Verwendung eines spielfreien Getriebes für den Drehantrieb unabhängige Patentansprüche zu richten, die ggf. in Teilanmeldungen weiterverfolgt werden.

Bevorzugte Ausführungsbeispiele der Erfindung werden im Folgenden anhand schematischer Zeichnungen näher erläutert. Es zeigen:
Figur 1 eine dreidimensionale Darstellung eines Ausführungsbeispiels eines erfindungsgemäßen 3D-Laserscanners;
Figuren 2 und 3 eine Rückansicht bzw. eine Vorderansicht des Laserscanners gemäß Figur 1;
Figur 4 eine Seitenansicht des Laserscanners;
Figur 5 einen Schnitt entlang der Linie A-A in Figur 4;
Figur 6 einen Schnitt entlang der Linie B-B in Figur 3;
Figuren 7 und 8 Ansichten des Laserscanners gemäß Figur 1 bei abgenommenen Gehäuseabdeckungen und
Figur 9 eine Detaildarstellung einer Aufnahme eines internen Datenspeichers des Laserscanners gemäß Figur 1.

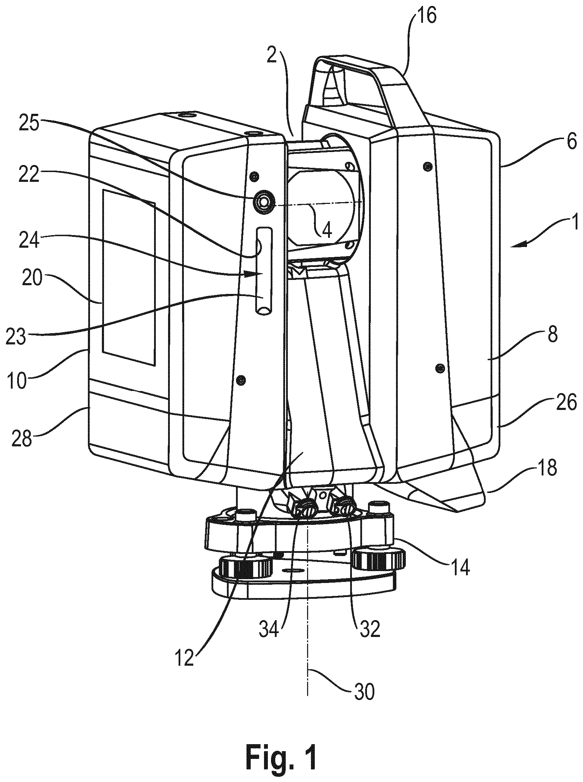

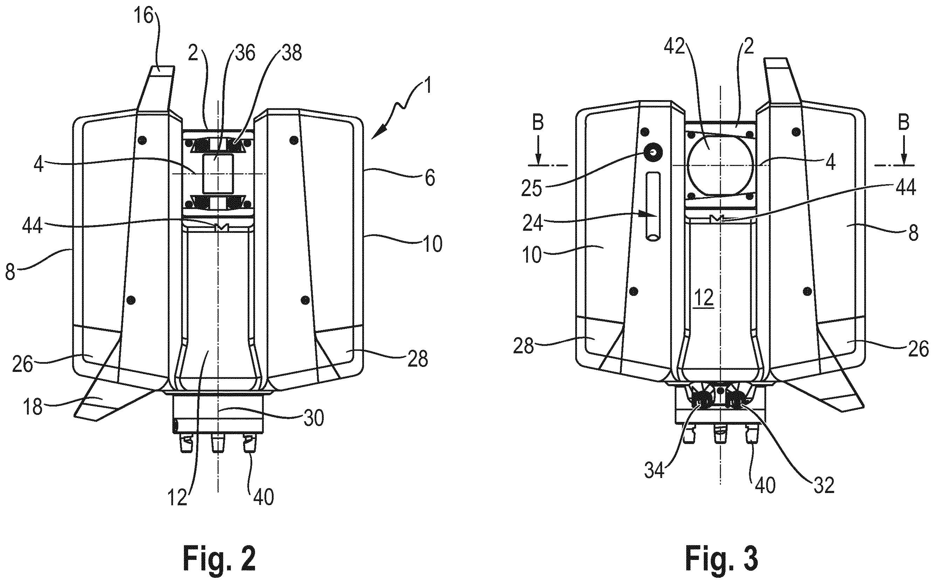

Figur 1 zeigt eine dreidimensionale Darstellung eines Ausführungsbeispiels eines 3D-Laserscanners 1. Dieser hat einen Mess- oder Drehkopf, im Folgenden Rotor 2 genannt, der um eine horizontale Rotationsachse 4 (siehe auch Figuren 2, 3) drehbar an einem Gehäuse 6 des Laserscanners 1 gehalten ist. Dieses Gehäuse 6 hat - ähnlich wie bei den eingangs beschriebenen bekannten Lösungen - zwei Gehäuseteile 8, 10, zwischen denen sich der Rotor 2 erstreckt. In der Abbildung gemäß Figur 1 unterhalb des Rotors 2 sind die beiden Gehäuseteile 8, 10 über ein Gehäusezwischenteil 12 mit einander verbunden, das sich in an sich bekannter Weise zum Rotor 2 hin verjüngt, um eine Abschattung bei der Vermessung zu minimieren.

Das Gehäuse 6 ist über einen justierbaren Befestigungsflansch 14 an einem Stativ oder einer verfahrbaren Plattform, beispielsweise einem Handwagen, wie er von der Anmelderin unter der Marke SCADDY^{®} angeboten wird, abgestützt. Bei dem dargestellten Ausführungsbeispiel ist das in Figur 1 rechte Gehäuseteil 8 mit zwei Griffen 16, 18 zur Vereinfachung der Handhabung ausgeführt.

An dem anderen Gehäuseteil 10 ist ein im Hochformat angeordnetes Touchdisplay 20 angeordnet, über das der Laserscanner 1 bedient werden kann und auf dem auch die Messergebnisse visuell darstellbar sind.

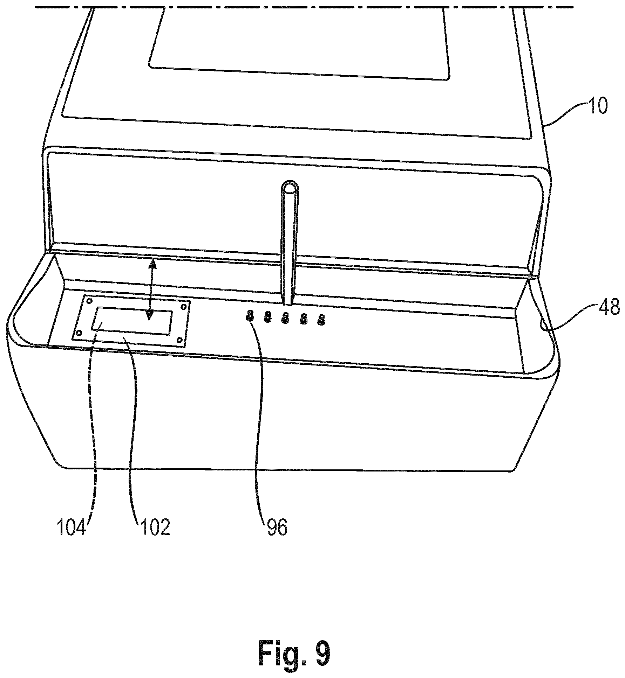

Wie im Folgenden noch näher erläutert, ist in diesem Gehäuseteil 10 eine Recheneinheit aufgenommen, deren interner Datenspeicher so in einer Aufnahme gehalten ist, dass er auf einfache Weise entnommen werden kann. Dies wird in der Folge anhand Figur 9 erläutert. Der beispielhaft anhand Figur 9 näher beschriebene interne Datenspeicher (SATADOM) kann in geeigneter Weise gesichert sein, so dass ein versehentliches oder unbefugtes Herausnehmen erschwert wird.

Bei einem Ausführungsbeispiel der Erfindung ist ein von einer Abdeckung 23 abgedeckter Slot 22 zur Aufnahme eines zusätzlichen Speichermediums, bspw. einer SD-Karte 24 ausgebildet, auf die Messdaten kopiert werden können. Diese Variante entspricht jedoch nicht den oben genannten sicherheitsrelevanten Auflagen und entfällt bei Scannern, die diese Auflagen erfüllen müssen.

Das Ein- und Ausschalten des Laserscanners 1 erfolgt über einen Schalter 25. Der in Figur 1 dargestellte Laserscanner 1 ist des Weiteren für einen netzunabhängigen Betrieb mit zwei Akkus 26, 28 ausgeführt, die bündig in die jeweiligen Gehäuseteile 8, 10 eingesetzt sind und dabei in einem vergleichsweise geringen Abstand zum Befestigungsflansch 14 angeordnet sind, um ein Kippmoment zu minimieren.

Zur Verringerung des Massenträgheitsmomentes sind die beiden Akkus 26, 28 auch in möglichst geringem Abstand zu einer Drehachse 30 angeordnet, um die der gesamte Laserscanner 1 drehbar ist, so dass bei einer Drehung oder Verschwenkung um die Drehachse 30 bei um die Rotationsachse 4 rotierendem Rotor 2 der gesamte umliegende Raum vermessen werden kann.

**In** der Darstellung gemäß Figur 1 zu sehen sind auch ein Stromanschluss 32 und ein LAN-Anschluss 34, so dass der Laserscanner 1 auch mit einer externen Stromversorgung betreibbar ist und die Messsignale über den LAN-Anschluss 34 an einen im Feld befindlichen Satellitenrechner zur Registrierung und/oder Auswertung des Scans übertragbar sind.

Selbstverständlich können diese Registrierung und Auswertung auch am Laserscanner 1 selbst erfolgen.

Die Vorgehensweise bei einer derartigen Registrierung und Auswertung werden in der DE 10 2016 102 607 A1 der Anmelderin erläutert.

Figur 2 zeigt eine Rückansicht des Laserscanners gemäß Figur 1. Demgemäß ist im Rotor 2 zur Erfassung von Bild-/Farbinformationen des Messobjektes eine Farbkamera 36 (sichtbar ist hier strenggenommen nur ein Kamerafenster) aufgenommen. Um diese Bildinformationen mit ausreichender Qualität erfassen zu können, ist der Rotor 2 mit einer Leuchteinheit 38 ausgebildet, über die das Bildfeld ausgeleuchtet werden kann. Diese Leuchteinheit 38 hat beim dargestellten Ausführungsbeispiel vier LEDs, die im Umfangsbereich der Farbkamera 36 angeordnet sind, um eine optimale Ausleuchtung zu gewährleisten. Einzelheiten dieser Leuchteinheit sind in der parallelen Anmeldung mit dem Aktenzeichen DE 10 2017 114 617.2 der Anmelderin erläutert.

In der Darstellung gemäß Figur 2 sieht man auch sehr deutlich die Integration der beiden Akkus 26, 28 in die Gehäuseteile 8, 10. Die Befestigung des Gehäuses 6 an dem in Figur 2 nicht dargestellten Befestigungsflansch 14 erfolgt über drei auf einem Teilkreis liegende Befestigungszapfen 40, von denen in der Darstellung gemäß Figur 2 lediglich einer mit einem Bezugszeichen versehen ist.

Gemäß der Vorderansicht in Figur 3 ist am Rotor 2 der Ausgang bzw. Eingang der Laseroptik angeordnet; dieser ist von einem schräg angestellten Schutzglas 42 überdeckt, wie es in der eingangs genannten DE 101 50 436 B4 beschrieben ist.

Wie aus den Abbildungen gemäß den Figuren 1 bis 3 ersichtlich, ist das Gehäuse 6 des Laserscanners 1 glattflächig, beispielsweise ohne Kühlrippen oder dergleichen ausgebildet, so dass die Außenkontur auch aerodynamisch optimiert ist und möglichst wenig Widerstand gegen Wind oder bei der Rotation/Drehung des Laserscanners 1 bietet.

In den Darstellungen gemäß den Figuren 2 und 3 ist des Weiteren noch ein Referenzmodul 44 für die Distanzmessung dargestellt.

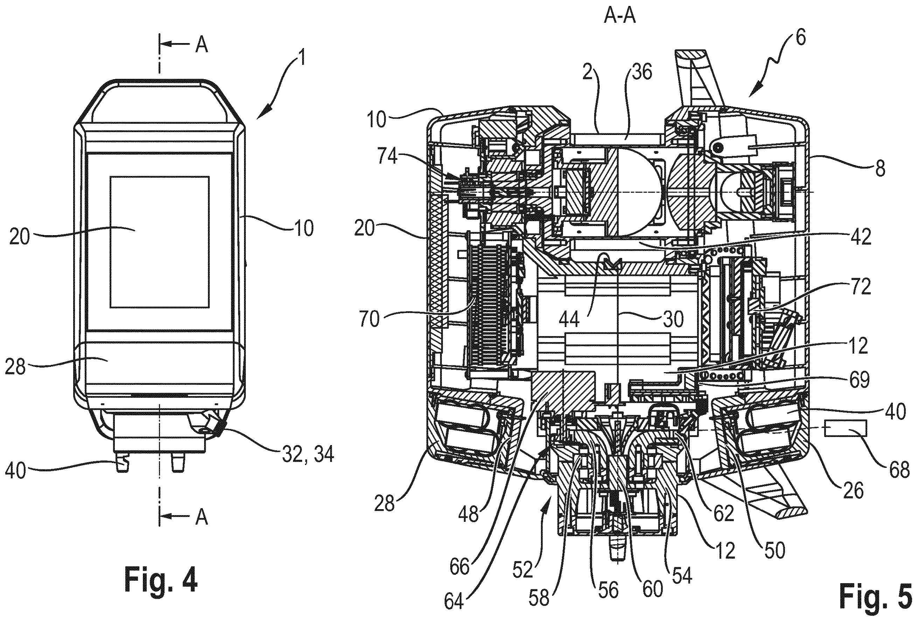

Figur 4 zeigt eine Seitenansicht auf das Gehäuseteil 10, an dem das Touchdisplay 20 angeordnet ist. Darunterliegend ist der Akku 28 angeordnet.

Die Akkus/Batterien 26, 28 sind herausnehmbar an den Gehäuseteilen 8, 10 gelagert, so dass sie auch über eine externe Ladestation aufladbar sind. Bei Anschluss an das Stromnetz über den Stromanschluss 32 erfolgt die Aufladung der Akkus 26, 28 über den Laserscanner 1.

Figur 5 zeigt einen Schnitt entlang der Linie A-A in Figur 4. In dieser Darstellung sieht man recht deutlich die beiden Akkus 26, 28, die jeweils als Batterieblock mit einer Vielzahl von aufladbaren Batterien 46 ausgebildet sind und in eine Aufnahme 48, 50 des jeweiligen Gehäuseteils 8, 10 eingesetzt werden.

In dem Schnitt gemäß Figur 5 erkennt man das Grundprinzip eines Drehantriebes 52, über den das Gehäuse 6 zur Verschwenkung um die Drehachse 30 angetrieben wird. Das Gehäuse 6 ist dabei über das Gehäusezwischenteil 12 auf einer nach unten auskragenden topfförmigen Basis 54 gelagert, wobei das Gehäusezwischenteil 12 über eine Antriebsnabe 56 in die Basis 54 eintaucht und dort in Radialrichtung über eine Lageranordnung 58 sowie eine mittige Achse 60 geführt ist.

Die Antriebsnabe 56 ist mit einer Außenverzahnung 62 ausgeführt, die mit einem Antriebsritzel 64 kämmt, das über eine Motorwelle eines Motors 66 angetrieben ist, der an der Basis 54 abgestützt ist. Das Antriebsritzel 64 und die Außenverzahnung 62 bilden ein Zahnradgetriebe, das spielfrei ausgeführt ist.

Der jeweilige Drehwinkel des Gehäuses 6 und somit die Drehwinkelposition der Farbkamera 36 und des Laserstrahls wird über einen in Figur 5 angedeuteten Encoder 68 erfasst, der den Drehwinkel mit Bezug zur mittigen Achse 60 abtastet. Die spielfreie Ausgestaltung des Zahnradgetriebes ermöglicht eine hohe Messgenauigkeit des Encoders 68 und somit eine exakte Drehwinkelbestimmung. Üblicher Weise sind derartige Encoder am Motor 66 angeordnet, so dass die Drehwinkelposition des Gehäuses 2 nur mittelbar erfasst ist.

Wie erwähnt, behält sich die Anmelderin vor, auf das Vorsehen eines spielfreien Getriebes, vorzugsweise eines Zahnradgetriebes und auf die Drehwinkelbestimmung mittels eines an der Achse angeordneten Encoders, einen eigenen Anspruch zu richten.

In der Darstellung gemäß Figur 5 ist auch die eingangs genannte, im Gehäuseteil 10 aufgenommene Recheneinheit 70 mit den zum Betrieb des Laserscanners 1 erforderlichen Steuerungsmodulen sichtbar. Wie anhand der Figur 9 noch näher erläutert, hat diese Recheneinheit 70 (CPU) in einer nicht zu Erfindung gehörenden Ausgestaltung einen internen Flash-Speicher, der von außen nicht zugänglich ist. Auf diesem Flash-Speicher sind das Betriebssystem und die sonstige Software zum Betrieb des Laserscanners 1 abgelegt. Ein Beschreiben des Flash-Speichers mit Daten ist nicht möglich, da ein Schreibschutz vorhanden ist.

Die Scandaten und die Loggingdateien liegen auf einem internen Datenspeicher oder Laufwerk, der oder das entnommen werden kann, weitere Einzelheiten werden anhand Figur 9 erläutert.

Die vorbeschriebene SD-Karte dient - wie erwähnt - lediglich zur Kopie der auf dem internen Datenspeicher oder Laufwerk abgelegten Daten. Diese Option mit dem zusätzlichen SD-Kartenspeicher kann jedoch weggelassen werden. Bei Anwendungen mit geringeren Sicherheitsanforderungen kann darauf verzichtet werden, den internen Datenspeicher oder das interne Laufwerk (SATADOM) auswechselbar vorzusehen. In diesem Fall wird jedoch die Option mit der SD-Karte realisiert, um die Verarbeitung der Daten auf externen Rechnern und die Datensicherung zu vereinfachen.

In dem in Figur 5 obenliegenden Bereich des Laserscanners 1 ist der vorgenannte Rotor 2 angeordnet. Dazwischenliegend ist eine als Laserradar-Messsystem 72 bezeichnete Einheit angeordnet, die der Recheneinheit 70 gegenüber liegt und im Gehäuseteil 8 aufgenommen ist. Dieses Laserradar-Messsystem 72 enthält unter anderem zumindest einen Detektor zur Erfassung der vom Messobjekt reflektierten Signale.

Die von der Farbkamera 36 erfassten Bilddaten werden über eine abhebbare Schleifringanordnung 74 an die Recheneinheit 70 übertragen. Die Funktion dieser Schleifringanordnung 74 ist in der eingangs genannten DE 10 2012 105 027 A1 erläutert. Demgemäß wird diese Schleifringanordnung 74 bei der Entfernungsmessung mittels des Lasers außer Eingriff gebracht, so dass die Reibung während der Entfernungsmessung minimal ist. Zur Erfassung der Bilddaten wird dann im Anschluss an die Entfernungsmessung die Schleifringanordnung in Wirkeingriff gebracht, so dass die dann mittels der Farbkamera 36 erfassten Bilddaten an die Recheneinheit 70 übertragen werden.

Mit dem Bezugszeichen 69 ist in der Darstellung gemäß Figur 5 eine Neigungsmesseinrichtung 69 versehen, über die eine Neigung des Laserscanners 1 erfassbar ist, so dass die Messwerte entsprechend dieser Neigung korrigiert werden können.

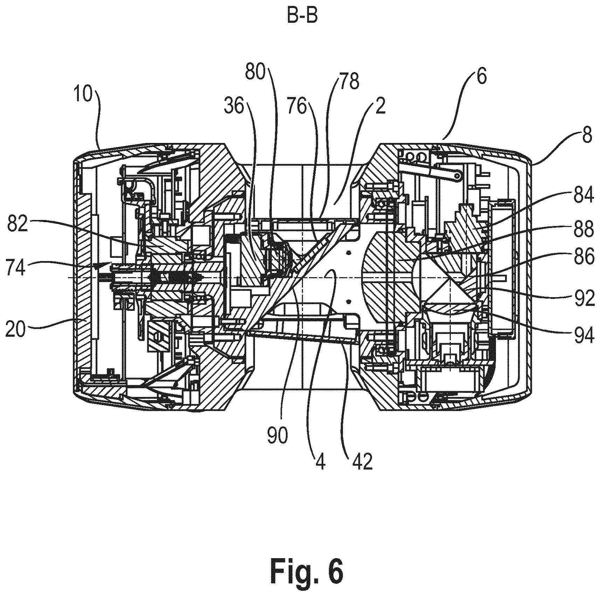

Die Strahlführung des Entfernungsmesssystems wird anhand Figur 6 erläutert, die einen Schnitt entlang der Linie B-B in Figur 3 zeigt.

Man erkennt in dieser Schnittdarstellung die eigentliche Farbkamera 36, deren Objektiv 80 in etwa achsparallel zur Rotationsachse 4 angeordnet ist. Die Farbkamera 36 kann beispielsweise eine Chipkamera sein, bei der auf einer Platine der eigentliche Aufnahmechip und das Objektiv 80 angeordnet sind. Die die Farbinformationen des zu vermessenden Objektes tragenden Lichtstrahlen treten über ein Kamerafenster 78 in den Rotor 2 ein und werden über einen Kameraspiegel 76 in Richtung auf das Objektiv 80 der Farbkamera 36 umgelenkt. Die Übertragung der Farbinformation erfolgt dann über die beschriebene Schleifringanordnung 74 zur Recheneinheit 70.

Der Antrieb des Rotors 2 erfolgt über einen DC-Motor 82, dem wiederum ein Encoder zur Erfassung der Drehwinkelposition des Rotors 2 zugeordnet ist. Der prinzipielle Aufbau eines derartigen Rotorantriebs ist in der DE 10 2012 105 027 A1 erläutert.

Der Laserstrahl oder die bei einem Messsystem mit mehreren Wellenlängen/Frequenzen verwendeten Laserstrahlen wird/werden jeweils über eine handelsübliche Laserdiode ausgesendet, wobei der divergente Strahl der Laserdiode über einen Kollimator 84 kollimiert wird. Dieser kollimierte Strahl tritt dann in an sich bekannter Weise über einen Kanal eines Spiegelkörpers auf einen Strahlausgang-Spiegel 86 und wird von diesem in Richtung auf eine Einrichtung zur Strahlverjüngung 88 umgelenkt, die mit einem Galilei-Teleskop ausgeführt ist. Der resultierende Laserstrahl/Messstrahl wird dann über einen Planschrägspiegel 90 in Richtung auf das zu vermessende Objekt umgelenkt und tritt durch das vorgenannte Schutzglas 42 hindurch aus dem Rotor 2 aus. Der vom Messobjekt reflektierte Strahl tritt entsprechend durch das Schutzglas 42 hindurch in den Rotor 2 ein und wird über den Planschrägspiegel 90 in Richtung auf den Spiegelkörper umgelenkt, der einen Strahleingang-Spiegel 92 aufweist, über den die reflektierten Strahlen in Richtung auf den Detektor des Laserradar-Messsystems 72 (siehe Figur 5) umgelenkt werden. Der prinzipielle Aufbau einer derartigen Strahlführung ist bekannt, so dass weitere Erläuterungen entbehrlich sind.

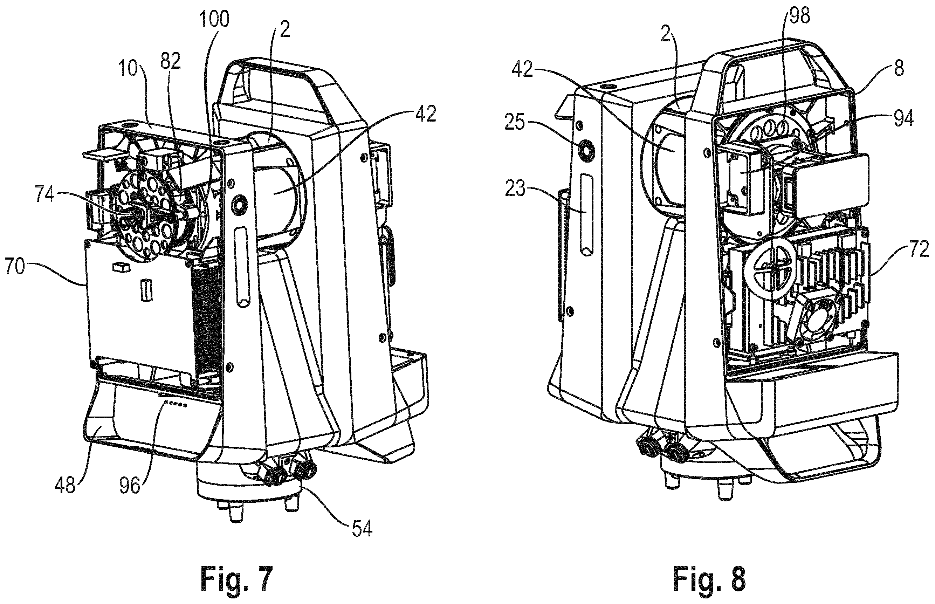

In der Darstellung gemäß Figur 6 ist noch eine Fokussiereinrichtung 94 gezeigt, über die im Nahbereich eine Fokussierung mit Intensitätsanpassung ermöglicht ist. Diese Fokussierung ist von außen her zugänglich, wenn gemäß den Figuren 7 und 8 eine Abdeckung des Gehäuseteils 8 abgenommen wird.

Figur 7 zeigt das Gehäuseteil 10 mit abgenommener Abdeckung, die auch das Touchdisplay 20 trägt. Bei Abnahme dieser Abdeckung sind dann entsprechend die Recheneinheit 70 (CPU), der DC-Motor 82 und auch die Schleifringanordnung 74 zugänglich. In der Darstellung gemäß Figur 7 ist des Weiteren der Akku 28 entnommen, so dass die entsprechende Aufnahme 48 mit den elektrischen Kontakten 96 sichtbar ist.

Figur 8 zeigt das Gehäuseteil 8 bei abgenommener Abdeckung. Dabei wird die Fokussiereinrichtung 94 und die vorbeschriebene Strahlführung (mit den Spiegeln 86, 92 und der Einrichtung zur Strahlverjüngung 88) zugänglich. Unterhalb dieser Strahlführung ist das Laserradar-Messsystem 72 angeordnet. In der Darstellung gemäß den Figuren 7 und 8 ist des Weiteren auch die Lagerung 98, 100 des Rotors 2 sichtbar.

Wie erläutert, sind die bei der Vermessung anfallenden Scandaten und Loggingdateien auf einem internen Datenspeicher oder Laufwerk (SSD, SATADOM) 104 der Recheneinheit 70 abgelegt. Dazu ist der Laserscanner 1 gemäß Figur 9 so ausgelegt, dass dieser interne Datenspeicher 104 entnommen werden kann, wobei in einer nicht zu Erfindung zählenden Ausgestaltung das Betriebssystem und Programm auf einem internen Flash-Speicher abgelegt und von außen nicht zugänglich sind oder überschrieben werden können. Das interne Laufwerk 104 ist bei dem Ausführungsbeispiel in Figur 9 bei abgenommenem Akku 28 zugänglich. In der Aufnahme 48 ist eine Klappe 102 vorgesehen, die beispielsweise verrastet oder verschraubt ist. Bei geöffneter Klappe 102 kann dann das interne Laufwerk 104 mit den Scandaten und den Loggingdateien entnommen werden - im Falle der nicht zur Erfindung zählenden Ausgestaltung ist es dann aufgrund des Schreibschutzes des internen Flash-Speichers nicht möglich, dass der Laserscanner 1 noch weitere Daten enthält. Dadurch ist sichergestellt, dass die erfassten Daten in der Anlage verbleiben und nicht nach außen dringen.

Wie eingangs erläutert, ist erfindungsgemäß vorgesehen, dass auch das Betriebssystem und das für die Ansteuerung des Laserscanners 1 erforderliche Programm auf dem entnehmbaren Datenspeicher/Laufwerk 104 implementiert sind, so dass der Laserscanner 1 nach der Entnahme dieses Laufwerkes 104 "tot" ist - ein Rückschluss auf vorhergehende Messungen ist dann nicht mehr möglich.

Selbstverständlich kann das interne Laufwerk 104 auch im Bereich der Recheneinheit 70 im Gehäuseteil 10 aufgenommen sein.

Offenbarungsgemäß kann des Weiteren vorgesehen werden, dass der Laserscanner mit drei Messfrequenzen betrieben wird, so dass die Messgenauigkeit gegenüber herkömmlichen Lösungen mit zwei Messfrequenzen deutlich verbessert ist.

Wie vorstehend erwähnt, ist der Laserscanner vorzugsweise mit einer Navigationseinheit ausgeführt, die eine Ermittlung der Position auch dann ermöglicht, wenn kein GNSS-/GPS-Signal vorliegt.

Wie eingangs erläutert, werden weitere wesentliche Merkmale des beschriebenen Laserscanners neben der Erhöhung der Sicherheit durch das Vorsehen eines entnehmbaren internen Laufwerkes auch in dem spielfreien Antrieb der vertikalen Drehachse und der Anordnung der Akkus sowie in dem Betrieb des Laserscanners mit mehr als zwei Messfrequenzen gesehen.

Offenbart ist ein Laserscanner, bei dem Scandaten und Loggingdateien nur auf einem auf einfache Weise auswechselbaren Datenspeicher abgelegt sind.

### Bezugszeichenliste:

- 1: Laserscanner
- 2: Rotor/Drehkopf
- 4: Rotationsachse
- 6: Gehäuse
- 8: Gehäuseteil
- 10: Gehäuseteil
- 12: Gehäusezwischenteil
- 14: Befestigungsflansch
- 16: Griff
- 18: Griff
- 20: Touchdisplay
- 22: Slot
- 23: Abdeckung
- 24: SD-Karte
- 25: Schalter
- 26: Akku
- 28: Akku
- 30: Drehachse
- 32: Stromanschluss
- 34: LAN-Anschluss
- 36: Farbkamera
- 38: Leuchteneinheit
- 40: Befestigungszapfen
- 42: Schutzglas
- 44: Referenzmodul
- 46: Batterie
- 48: Aufnahme
- 50: Aufnahme
- 52: Drehantrieb
- 54: Basis
- 56: Antriebsnabe
- 58: Lageranordnung
- 60: Achse
- 62: Außenverzahnung
- 64: Antriebsritzel
- 66: Motor
- 68: Encoder
- 69: Neigungsmesseinrichtung
- 70: Recheneinheit
- 72: Laserradar-Messsystem
- 74: Schleifringanordnung
- 76: Kameraspiegel
- 78: Kamerafenster
- 80: Objektiv
- 82: DC-Motor
- 84: Kollimator
- 86: Strahlausgang-Spiegel
- 88: Einrichtung zur Strahlverjüngung
- 90: Planschrägspiegel
- 92: Strahleingang-Spiegel
- 94: Fokussiereinrichtung
- 96: Kontakt
- 98: Lagerung
- 100: Lagerung
- 102: Klappe
- 104: interner Datenspeicher / internes Laufwerk

## Patentansprüche

1. Laserscanner (1) mit einem Rotor (2), der drehbar an einem Gehäuse (6) gehalten ist, wobei eine Optik vorgesehen ist, um einen von einem Sender abgegebenen Messstrahl auf ein Messobjekt oder einen von diesem reflektierten Strahl auf einen Detektor zu lenken, wobei eine Recheneinheit (70) zur Steuerung des Laserscanners und zur Datenverarbeitung vorgesehen ist, die einen internen Datenspeicher (104) hat, auf dem die von der Recheneinheit (70) verarbeiteten Scandaten abgelegt sind, wobei der Datenspeicher (104) herausnehmbar in einer Aufnahme des Gehäuses (6) gehalten ist, **dadurch gekennzeichnet, dass** auf dem Datenspeicher (104) auch eine für eine Ansteuerung des Laserscanners (1) erforderliche Software und ein Betriebssystem implementiert sind, sodass der Laserscanner (1) nach der Herausnahme des Datenspeichers (104) nicht mehr funktionsfähig ist.

2. Laserscanner nach Patentanspruch 1, wobei die Aufnahme nach Abnahme einer Abdeckung oder eines funktionalen Bauelementes des Laserscanners (1) zugänglich ist.

3. Laserscanner nach Patentanspruch 1 oder 2, wobei der Rotor (2) zwischen zwei Gehäuseteilen (8, 10) gehalten ist, die mittels eines sich zum Rotor (2) hin verjüngenden Gehäusezwischenteils (12) mit einander verbunden sind.

4. Laserscanner nach einem der vorhergehenden Patentansprüche, wobei das Gehäuse (6) um eine senkrecht zu einer Rotationsachse (4) des Rotors (2) angeordnete Drehachse (30) mittels eines Drehantriebes drehbar ist.

5. Laserscanner nach Patentanspruch 4, wobei der Drehantrieb ein spielfreies Getriebe, vorzugsweise ein Zahnradgetriebe aufweist und die Winkelposition des Gehäuses (6) über einen an einer Achse (60) des Gehäuses (6) angeordneten Encoder (68) erfassbar ist.

6. Laserscanner nach einem der vorhergehenden Patentansprüche, wobei an jedem Gehäuseteil (8, 10) ein Akku (26, 28) gehalten ist und die Gehäuseteile (8, 10) und die Akkus (26, 28) so ausgelegt sind, dass die rotierenden Massen und Außengeometrien bezüglich der Drehachse in etwa ausgeglichen ist und dass ein Kippmoment bezüglich einer Abstützung des Laserscanners minimal ist.

7. Laserscanner nach Patentanspruch 6, wobei sich die Akkus (26, 28) mit einer Abdeckung (23) des jeweiligen Gehäuseteils (8, 10) zu einer baulichen Einheit ergänzen.

8. Laserscanner nach einem der vorhergehenden Patentansprüche, wobei an einem Gehäuseteil (8) ein in Hochformat angeordnetes Touchdisplay (20) angeordnet ist.

9. Laserscanner nach einem der vorhergehenden Patentansprüche, wobei dieser nach dem Messprinzip der Phasenverschiebung mit drei Messfrequenzen betrieben ist.

10. Laserscanner nach einem der vorhergehenden Patentansprüche, wobei die Außenflächen des Gehäuses (6) im Wesentlichen glattflächig ausgebildet sind.

11. Laserscanner nach einem der vorhergehenden Patentansprüche, wobei der herausnehmbare interne Datenspeicher (104) ein SSD-Speicher, insbesondere ein SATADOM-Speicher ist.

## Claims

1. Laser scanner (1) comprising a rotor (2) rotatably mounted on a housing (6), wherein optics are provided for directing a measuring beam emitted from an emitter onto a measuring object, or a beam reflected therefrom onto a detector, wherein a calculator unit (70) is provided for controlling the laser scanner and for data processing, the calculator unit having an internal data memory (104) on which the scan data processed by the calculator unit (70) are stored, wherein the data memory (104) is removably held in an accommodation of the housing (6), **characterized in that** an operating system and software for controlling the laser scanner are stored on the data memory (104), so that the scanner is no longer functional after removing the data memory (104).

2. The laser scanner according to claim 1, wherein the accommodation is accessible after removal of a cover or a functional component of the laser scanner (1).

3. The laser scanner according to claim 1 or 2, wherein the rotor (2) is held between two housing parts (8, 10) which are connected to one another by means of a housing intermediate part (12) tapering towards the rotor (2).

4. The laser scanner according to any of the preceding claims, wherein the housing (6) is rotatable about a pivot axis (30) arranged perpendicular to an axis of rotation (4) of the rotor (2) by means of a rotary drive.

5. The laser scanner according to claim 4, wherein the rotary drive comprises a play-free gear, preferably a gear train, and the angular position of the housing (6) can be detected via an encoder (68) arranged on an axis (60) of the housing (6).

6. The laser scanner according to any of the preceding claims, wherein an accumulator (26, 28) is held on each housing part (8, 10) and the housing parts (8, 10) and the accumulators (26, 28) are designed such that the rotating masses and outer geometries are approximately balanced with respect to the pivot axis, and that an overturning moment with respect to a support of the laser scanner is minimal.

7. The laser scanner according to claim 6, wherein the accumulators (26, 28) complement one another with a cover (23) of the respective housing part (8, 10) to form a structural unit.

8. The laser scanner according to any of the preceding claims, wherein a touch display (20) arranged in vertical format is located on a housing part (8).

9. The laser scanner according to any of the preceding claims, wherein the laser scanner is operated with three measuring frequencies according to the measuring principle of phase shift.

10. The laser scanner according to any of the preceding claims, wherein the outer surfaces of the housing (6) have a substantially smooth surface.

11. The laser scanner according to any of the preceding claims, wherein the removable internal data memory (104) is an SSD memory, in particular a SATADOM memory.

## Revendications

1. Scanner laser (1) avec un rotor (2) qui est maintenu de manière rotative contre un boîtier (6), dans lequel une optique est prévue afin de diriger un faisceau de mesure émis par un émetteur sur un objet de mesure ou un faisceau réfléchi par celui-ci sur un détecteur, dans lequel une unité de calcul (70) est prévue pour la commande du scanner laser et pour le traitement de données, unité qui présente une mémoire de données (104) interne sur laquelle sont stockées des données de balayage traitées par l'unité de calcul (70), dans lequel la mémoire de données (104) est maintenue de manière amovible dans un logement du boîtier (6), **caractérisé en ce qu'**un logiciel nécessaire à une commande du scanner laser (1) et un système d'exploitation sont aussi implémentés sur la mémoire de données (104) de sorte que le scanner laser (1) ne soit plus fonctionnel après le retrait de la mémoire de données (104).

2. Scanner laser selon la revendication 1, dans lequel le logement est accessible après le retrait d'un recouvrement ou d'un élément structurel fonctionnel du scanner laser (1).

3. Scanner laser selon la revendication 1 ou 2, dans lequel le rotor (2) est maintenu entre deux parties de boîtier (8, 10) qui sont reliées l'une à l'autre au moyen d'une partie intermédiaire de boîtier (12) se rétrécissant vers le rotor (2).

4. Scanner laser selon l'une quelconque des revendications précédentes, dans lequel le boîtier (6) est rotatif autour d'un axe de rotation (30) disposé perpendiculairement à un axe de rotation (4) du rotor (2) au moyen d'un entraînement en rotation.

5. Scanner laser selon la revendication 4, dans lequel l'entraînement en rotation présente un engrenage sans jeu, de préférence un engrenage à roues dentées, et la position angulaire du boîtier (6) peut être détectée par le biais d'un codeur (68) disposé au niveau d'un axe (60) du boîtier (6).

6. Scanner laser selon l'une quelconque des revendications précédentes, dans lequel un accumulateur (26, 28) est maintenu contre chaque partie de boîtier (8, 10), et les parties de boîtier (8, 10) et les accumulateurs (26, 28) sont conçus de sorte que les masses rotatives et les géométries extérieures soient à peu près compensées par rapport à l'axe de rotation et en ce qu'un couple de basculement par rapport à un appui du scanner laser soit minimal.

7. Scanner laser selon la revendication 6, dans lequel les accumulateurs (26, 28) sont complétés par un recouvrement (23) de la partie de boîtier (8, 10) respective pour former une unité structurelle.

8. Scanner laser selon l'une quelconque des revendications précédentes, dans lequel un écran tactile (20) disposé en format portait est disposé au niveau d'une partie de boîtier (8).

9. Scanner laser selon l'une quelconque des revendications précédentes, dans lequel celui-ci fonctionne selon le principe de mesure du déphasage avec trois fréquences de mesure.

10. Scanner laser selon l'une quelconque des revendications précédentes, dans lequel les surfaces extérieures du boîtier (6) sont formées sensiblement de manière lisse.

11. Scanner laser selon l'une quelconque des revendications précédentes, dans lequel la mémoire de données (104) interne amovible est une mémoire SSD, en particulier une mémoire SATADOM.
